(19) Europäisches Patentamt
European Patent Office
Office européen des brevets

(11) **EP 1 880 797 B1**

(12) **EUROPEAN PATENT SPECIFICATION**

(45) Date of publication and mention
of the grant of the patent:
**08.04.2009   Bulletin 2009/15**

(51) Int Cl.:
***B23Q 11/00*** (2006.01)

(21) Application number: **06253799.8**

(22) Date of filing: **20.07.2006**

(54) **Weight compensation device**

Gewichtsausgleichsvorrichtung

Dispositif de compensation du poids

(84) Designated Contracting States:
**AT DE ES FR GB IT**

(43) Date of publication of application:
**23.01.2008   Bulletin 2008/04**

(73) Proprietor: **Ross Europa GmbH**
**63225 Langen (DE)**

(72) Inventor: **Stroh, Wilfried**
**63329 Egelsbach (DE)**

(74) Representative: **Giles, Ashley Simon et al**
**HASELTINE LAKE**
**Redcliff Quay**
**120 Redcliff Street**
**Bristol BS1 6HU (GB)**

(56) References cited:
**GB-A- 986 879        GB-A- 1 152 200**
**US-A- 3 018 697       US-A1- 2002 084 113**

## Description

This invention relates to a weight compensation device, according to the preamble of claim 1, as for example known from GB-A-1 152 200.

Background of the Invention

Tools in machining applications are often substantial in size and weight. Accordingly, to facilitate greater precision, speed and acceleration in the movement of such tools, it is desirable to compensate for the weight of the tool.

GB986879 presents a weight compensation device in which the tool is supported by a pneumatic piston-cylinder arrangement, which is in flow communication with a large pressure vessel. The principle behind this device relies on the fact that, for a constant temperature system,

$$PV = constant,$$

where P and V represent the pressure and total volume of the system respectively. Therefore, if the volume of the pressure vessel is significantly greater than the volume displaced by the piston, there is little change in V and hence P. Thus the compensating force acting on the piston remains approximately constant.

However, a large pressure vessel is required to provide the near constant compensation force. Furthermore, a large pressure vessel cannot be positioned very close to the tool and significant piping is required. Such piping generates large pressure losses and reduces the response times of the system. Therefore the use of such systems is limited in high speed applications.

In addition to the problems described above, the device disclosed in GB986879 must also comply with the numerous regulations regarding the safe use of large pressure vessels. US6540459 circumvents this problem by using a spring to compensate for the weight of a tool. However, the force applied by the spring is not adjustable, so that the weight compensation device is suitable for supporting only a device of the weight for which it was constructed. It cannot be adapted easily to support a device of a different weight. Also, the force provided by the spring is constrained to vary significantly within a fixed range, so that the precision, speed and acceleration of the tool is compromised. Various aspects of the present invention seek to address these problems.

Summary of the Invention

According to the present invention there is provided a weight compensation device for compensating for the weight of a movable member, according to claim 1.

The resilient element may be a spring. When the moveable member moves in a direction with a vertical component, the first pressure space changes volume. This causes movement of the second piston in the second cylinder, resisted by the spring. As the second piston is able to move, the pressure in the first and the second pressure spaces changes less than if the volume of the second pressure space was fixed. Consequently, the force on the first piston varies less, and the weight of the moveable member is compensated for over its entire range of motion.

A weight compensation device according to the present invention can be used to support a linear motor driven tool arm in a CNC machine. In such applications, the speed of operation of the tool arm and its maximum acceleration can be increased compared to machine tools using conventional weight compensation devices. For example, the speed of movement of the tool arm can be increased from under 1 ms$^{-1}$ with a conventional weight compensation device to over 3 ms$^{-1}$ with a device according to the invention. Similarly, the maximum acceleration of the tool arm can be increased, because the weight of the tool arm is compensated for more accurately throughout the range of movement of the arm than in a conventional weight compensation device. It is to be understood that a weight compensation device according to the invention can be used to compensate for the weight of any moveable member. For example, the moveable member could comprise a workpiece rather than a machine tool or tool arm.

The device may further comprise a spring force adjuster for adjusting a force applied to the second piston by the spring, to compensate more accurately for the weight of the moveable member. For example, the moveable member may comprise a drill head having a motor, a chuck and a drill bit. If the drill bit is exchanged for a milling head of a different weight, the spring force applied by the spring can be adjusted, using the spring force adjuster, to compensate for the change in weight.

In an alternative embodiment, the resilient element may be a fluid. For example, the resilient element may be compressed air contained in the second pressure space of a pressure amplifier.

Brief Description of the Drawings

For a better understanding of the present invention, and to show more clearly how it may be carried into effect, reference will now be made, by way of example, to the following drawings, in which:

Figure 1 is a longitudinal section of a weight compensation device with a fixed spring pre-tension;

Figure 2 is a longitudinal section of a weight compensation device with a mechanically adjustable spring pre-tension;

Figure 3 is a longitudinal section of a weight compensation device with a hydraulically adjustable spring pre-tension;

Figure 4 is a longitudinal section of a weight compensation device with an electromotively adjustable spring pre-tension;

Figure 5 is a longitudinal section of a weight compensation device with a pressure stabiliser;

Figure 6a is a longitudinal section of a pressure amplifier in a first operative state; and

Figure 6b is a longitudinal section of a pressure amplifier in a second operative state.

Detailed Description of the Illustrative Embodiments

The present invention relates to a weight compensation device. Such devices are common in machining applications where a work-piece or tool is substantial in weight. It is desirable to compensate for the weight of the tool or work-piece to enable greater accuracy, speed and acceleration when moving it in a direction with a vertical component. This allows fine adjustments to be made and provides improved tolerances, in addition to allowing the weight to be moved at higher speed and with higher acceleration.

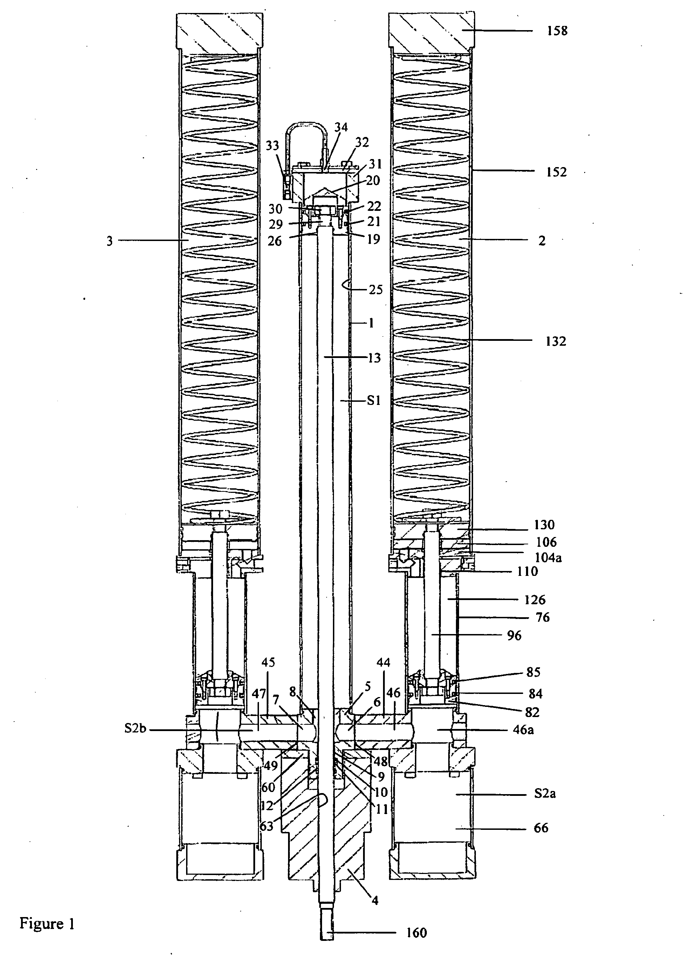

With reference to Figure 1, a weight compensation device according to a first embodiment of the present invention comprises a first cylinder 1 disposed between two second accumulator cylinders 2,3. The cylinders 1, 2, 3 are interconnected by a manifold. In the embodiment shown in Figure 1, there are two second cylinders 2, 3 connected to the manifold. There could, however, be any number of second cylinders 2, 3 connected to the manifold.

A piston rod 13 is disposed within the first cylinder 1 and passes through a cylinder head 5 of the first cylinder 1. At one end of the piston rod 13 is provided a threaded portion 160 for securing the piston rod 13 to a weight to be compensated (not shown), such as a machine tool and tool carrier.

A sleeve bearing 9 and first and a second low friction seals 10, 11 are disposed between the first cylinder head 5 and the piston rod 13. In addition, an annular channel 12 for lubricating the piston rod 13 is disposed in the first cylinder head 5. Two connecting passages (not shown) through the first cylinder head 5 open into the annular channel 12. One of the connecting passages provides a passage for lubricant to be delivered to the annular channel 12, whilst the other provides a passage for the removal of lubricant from the annular channel 12.

An adapter plate 60 is mounted on the side of the first cylinder head 5 opposite the cylinder 1. The adapter plate 60 holds a brake assembly 4, which is adapted to arrest the fall of the piston rod 13 and weight to be compensated, if the system fails and pressure is lost in the cylinder 1. The adapter plate 60 is preferably attached to the first cylinder head 5 by means of bolts (not shown) which pass through the adapter plate 60, and the brake assembly 4 is mounted to the manifold by means of bolts (not shown) which pass through the second adapter plate 60. The piston rod 13 passes through a bore 63 in the brake assembly 4.

The manifold consists of the first cylinder head 5 and first and second flanges 44 and 45. The first and second flanges 44 and 45 are mounted on opposite sides of the first cylinder head 5, preferably by means of bolts (not shown) which pass through the first and second flanges 44 and 45 and are screwed into the first cylinder head 5. First and second ring seals 48 and 49 provide a seal between the first cylinder head 5 and the first and second flanges 44 and 45 respectively.

A first piston 19 is slideably received in the first cylinder 1. The first piston 19 and the piston rod 13 are disposed concentrically within the first cylinder 1. A low friction seal 21 is provided on the first piston 19 and maintains a seal between the first piston 19 and a first cylinder tube 25 of the first cylinder 1. In a preferred embodiment, the first piston 19 is also provided with a low friction seal 22, which is mounted in series with the low friction seal 21.

A first pressure space S1 is defined between the first piston 19, the first cylinder tube 25 and the first cylinder head 5. First and second passages 46 and 47 extend through the first and second flanges 44 and 45 respectively. The first and second passages 46 and 47 are in fluid communication with the first pressure space S1 of the first cylinder 1 by means of first and second openings 6 and 7 and a passage 8 in the first cylinder head 5.

A bore 26 is disposed centrally through the first piston and receives the piston rod 13. A nut 30 engages a threaded portion 29 of the piston rod 13 to secure the first piston 19 to the piston rod 13.

The face 20 of the first piston 19, facing away from the manifold, is conical. Disposed above the first cylinder tube 25 is a cylinder head in the form of an end plug 31 to which is attached a lubricant spray device 33, filter element 32 and nozzle outlet 34.

The first cylinder head 5, first cylinder tube 25 and end plug 31 are held together with threaded rods (not shown).

The type and location of the lubricant spray device 33 can vary. In the embodiment shown, the lubricant spray device 33 is an air/oil spray device, and the outlet 34 of the lubricant spray device 33 is disposed so as to be concentric with the first piston 19.

The second accumulator cylinders 2, 3 are mounted on the manifold and are disposed on opposite sides of the first cylinder 1. The second cylinders 2, 3 are identical in construction and operation, so only the second cylinder 2 is described in the embodiments set out below.

The second cylinder 2 comprises a pressure vessel 66 a second cylinder tube 76 and a spring guide tube 152, which are fixed end to end along a longitudinal axis of the second cylinder 2. The second cylinder tube 76 is sealed to the flange 44 of the manifold, and an interior of the second cylinder tube 76 is in fluid communication with the first passage 46 in the flange 44 and with the interior of the pressure vessel 66 by means of a connector 46a. At its opposite end, the second cylinder tube 76 is connected to the spring guide tube 152 by means of an intermediate flange 104a.

A second piston 82, is slidably received in the second cylinder tube 76, of the second cylinder 2. A first low friction floating ring seal 84, and a second low friction floating ring seal 85, which are mounted in series about the second piston 82, maintain the seal between the second piston 82 and the second cylinder tube 76. The face of the second piston 82 on the side of the spring cylinder tube 152, is conical, so as to facilitate distribution of lubricant about the second piston 82.

A push rod 96 is connected to the second piston 82. An end of the push rod 96 opposite the second piston 82 passes through a central bore 110 in the intermediate flange 104a. A vent space 126 is defined between the intermediate flange 104a, the second piston 82 and the second cylinder tube 76 and is vented to the atmosphere through a passageway in the intermediate flange 104a. A fixed volume second pressure space S2a is defined within the pressure vessel 66, the connector 46a and the first passage 46 and a variable volume second pressure space S2b is defined by the second piston 82, the second cylinder tube 76 and the connector 46a. The fixed volume second pressure space S2a and the variable volume second pressure space S2b together define a second pressure space S2.

Disposed within the spring guide tube 152 is a spring stop 130. The spring stop 130 is connected to an end of the push rod 96. Also disposed within the spring guide tube 152 is a spring 132, one end of which is connected to the spring stop 130. Located above the intermediate flange 104a is a damping element 106 made of a soft material, which cushions the impact of the spring stop 130 on the intermediate flange 104a.

In the embodiment shown, only one spring 132 per second cylinder 2 is provided. Depending on the weight to be equalized and the fluid pressure required, it may be desirable to use a plurality of springs.

The end of the spring 132 opposite the spring stop 130, abuts an end plug 158 of the second cylinder 2. The complete assembly, comprising the intermediate flange 104a, the guide tube 152 and the end plug 158 is held together with rods (not shown) and is detachably fixed together.

The operation of the weight compensation device shown in Figure 1 will now be described. A weight, typically a tool or a work-piece, is attached to the weight compensation device via the threaded portion 160 of piston rod 13. As the weight is moved in a direction with a vertical component by an applied external force such as from a powered jig or robot arm, the piston rod 13 and first piston 19 slide within the first cylinder tube 25.

The first pressure space S1 of the first cylinder 1 is in flow communication with the second pressure spaces S2 of the second cylinders 2, 3 via the manifold. Thus, as the first piston 19 moves closer to the first cylinder head 5, the fluid within the first pressure space S1 is compressed. In a system using a fixed volume pressure space, the increase in pressure would cause an undesirable increase in the compensation force transmitted via the first piston 19 and piston rod 13. In conventional weight compensation devices, large pressure vessels alleviate this increase by ensuring that the volume displaced by the first piston 19 is small relative to the total volume of the system. The pressure increase is therefore relatively small. However, using large chambers can be impractical as previously discussed.

The present invention uses smaller pressure vessels 66, but provides second pressure spaces S2 having variable volume pressure spaces S2b. The variable volume of the pressure spaces S2b offsets the reduced effectiveness of smaller sized pressure vessels. As the pressure in the system increases, each second piston 82, is forced back against the action of the spring 132, thereby increasing the available volume and reducing the pressure increase. This helps to offset the effect of having smaller pressure vessels 66.

Whilst the compression of the spring 132 would suggest that the pressure acting on the second piston 82 must have increased (which is indeed the case), the fact that the volume of the system has also increased means that the pressure within the system has not increased as much as it would have without the variable volume pressure spaces S2b. Furthermore, the force provided by the spring 132 depends upon the spring stiffness and the spring displacement relative to its total length. If the spring displacement relative to its total length is small, the change in the spring force and hence pressure will be small.

In the above described embodiment, the second piston 82 is connected to the push rod 96, which is in turn connected to the spring stop 130 and the spring 132. The push rod 96 protrudes through the intermediate flange 104a so that the spring stop 130 can initially abut the intermediate flange 104a. This allows a pre-tension to be applied to the spring 132, so the spring compresses only once the pressure in the system has reached a predetermined level.

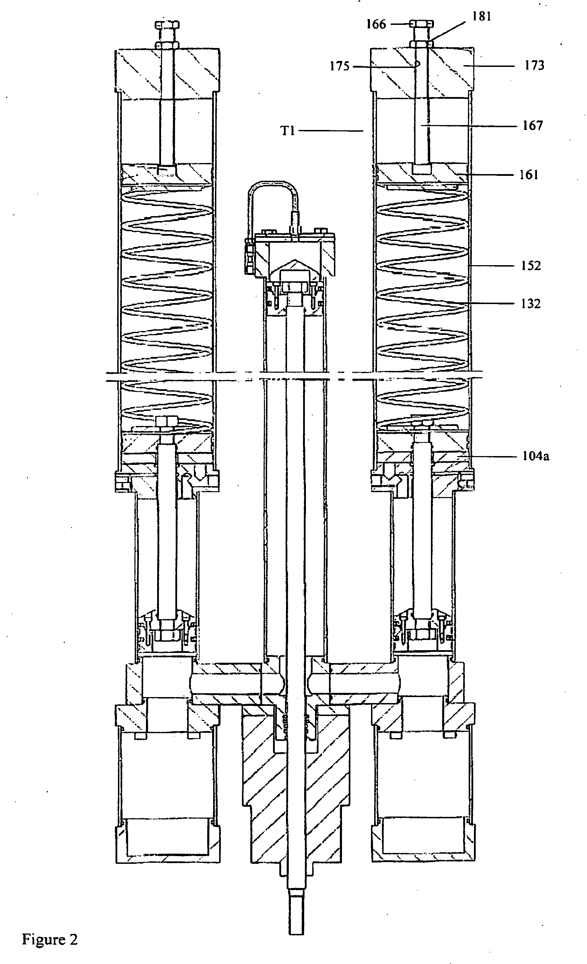

With reference to Figure 2, a weight compensation device according to a second embodiment of the present invention further comprises a mechanically controllable spring pre-tensioning device T1 for varying the tension in the spring 132. The second embodiment is identical to the first embodiment shown in Figure 1 apart from the mechanically controllable spring pre-tension device T1, which is located at the end of the spring guide tube 152 opposite the intermediate flange 104a. The mechanically controllable spring pre-tensioning device T1 consists of a spring plunger 161, slidably disposed within the spring guide tube 152, and an adjusting rod 167 rotatably mounted within the spring plunger 161.

The adjusting rod 167 is threaded and engages in a threaded bore 175 formed in an end plug 173. Thus, by rotating the adjusting rod 167, it can be screwed into or out of the end plug 173, so that the spring plunger 161 is moved away from or towards the end plug 173 and the tension in the spring 132 is adjusted. An end 166 of the adjusting rod 167, protruding from the end plug 173, has a hexagonal cross section. This allows a conventional spanner to be used to turn the adjusting rod 167, and hence vary the pre-tension in the spring 132. Other tool engaging shapes for the end of the first adjusting rod 167 are contemplated. A lock nut 181 is disposed on the adjusting rod 167, between the hexagonal end of the adjusting rod 167 and the end plug 173. The lock nut 181 is used to lock the adjusting rod 167 against the end plug 173.

The intermediate flange 104a, the spring guide tube 152 and the end plug 173 are detachable and are held together in use by means of rods (not shown).

The operation of the weight compensation device shown in Figure 2 will now be described. The second embodiment operates in a very similar manner to the first embodiment as described above. However, the second embodiment allows the pre-tension of the springs 132 to be varied. This is achieved by tightening or loosening the adjusting rod 167. By rotating the adjusting rod 167, the initial length, and hence pre-tension in the spring 132, can be varied. This is desirable when adjusting the weight compensation device for different weights to be compensated.

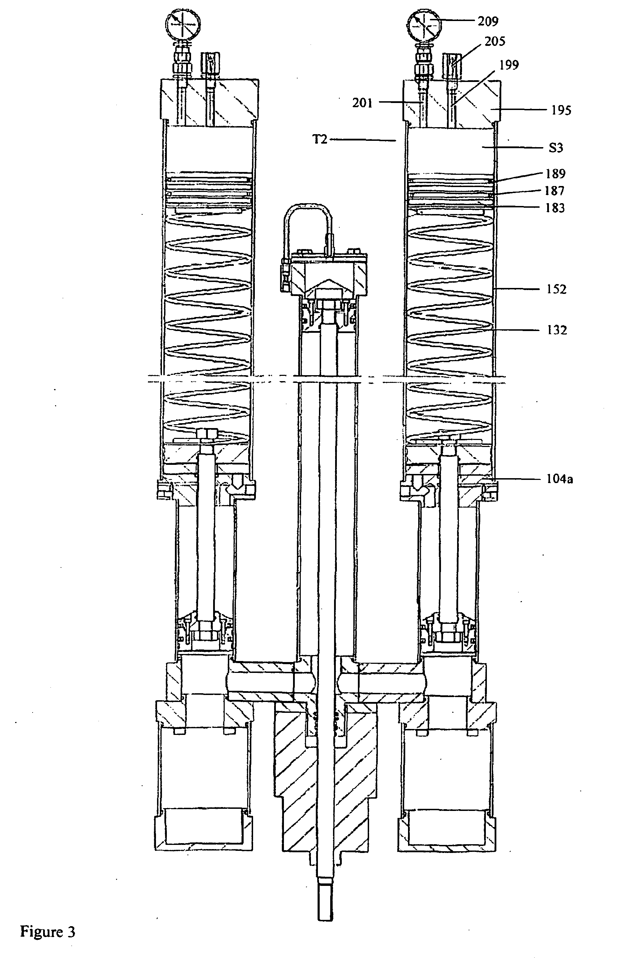

With reference to Figure 3, a weight compensation device according to a third embodiment of the present invention comprises a hydraulic spring pre-tensioning device T2 for varying the tension in the spring 132. The third embodiment is identical to the first embodiment shown in Figure 1, apart from the hydraulic spring pre-tension device T2 which is located at the end of the spring guide tube 152 opposite the intermediate flange 104a. The hydraulic spring pre-tensioning device T2 includes a spring plunger in the form of a third piston 183, which is slidably disposed within the spring guide tube 152 and abuts the spring 132.

Low friction floating ring seals 187, 189 are mounted in series the between the third piston 183, and the spring guide tube 152. The third piston 183, may also be fitted with a guide sleeve 191 (not shown). This configuration ensures that the spring pre-tension can be changed smoothly, to ensure a fast response and effectively reduces hysteresis to a minimum during the adjusting procedure.

An end plug 195 is mounted on the end of the spring guide tube 152 opposite the intermediate flange 104a. The end plug 195, spring guide tube 152 and third piston 183 define a third pressure space S3.

The third pressure space S3 can be filled or emptied with hydraulic fluid via a valve 205 which is mounted in a flow passage 199 formed through the end plug 195. As the volume of fluid changes, the third piston 183 is caused to move along the spring guide tube 152, thereby varying the tension in the spring 132. Once the required pre-tension in the spring 132 is achieved, the valve 205 is shut off.

To monitor the fluid pressure, a pressure-measuring device 209 is mounted in a second flow passage 201 formed through the end plug 195. The embodiment shown in Figure 3 uses a manometer to monitor the fluid pressure; however, other types of pressure measuring devices, e.g., electronic measuring systems or the like, can also be used in this embodiment and the other embodiments described in this specification.

In an alternative embodiment, the hydraulic spring pre-tensioning device T2 could be adjusted dynamically by means of a pumped hydraulic system (not shown).

The operation of the weight compensation device shown in Figure 3 will now be described. The third embodiment operates in a very similar way to the second embodiment as described above. However, the third embodiment allows the pre-tension of the spring 132 to be varied by changing the pressure of a fluid within the third pressure space S3. This is achieved by pumping or extracting a fluid through the valve 205. The spring 132 abuts the third piston 183, which is forced to move as the pressure in the third pressure space S3 is changed. Thus the initial length and hence pre-tension, in the spring 132 can be varied by changing the volume of fluid in the third pressure space S3. This is desirable when adjusting the weight compensation device for different weights to be compensated.

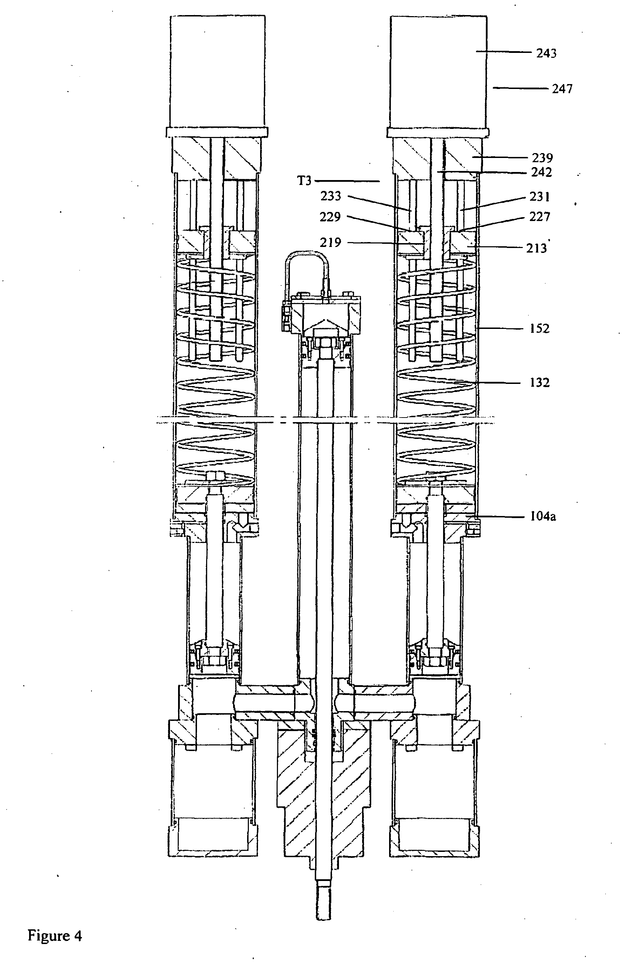

With reference to Figure 4, a weight compensation device according to a fourth embodiment of the present invention further comprises an electrically controllable spring pre-tensioning device T3 for varying the tension in the spring 132. The fourth embodiment is identical to the first embodiment shown in Figure 1 apart from the electrically controllable spring pre-tension device T3 which is located at the end of the spring guide tube 152 opposite the intermediate flange 104a. The electrically controllable spring pre-tensioning device T3 includes an electric actuator 247 which is attached to an end plug 239 of the spring guide tube 152. The electric actuator 247 comprises a motor 243 having a threaded output shaft 242. A spring plunger 213 is slideably received in the spring guide tube 152 and is prevented from rotating by a pair of guide rods 231, 233, which project into the spring guide tube 152 from the end plug 239. The guide rods 231 pass through bores 227, 229 formed through the spring plunger 213.

A nut 219 is fixed into the centre of the spring plunger 213 and is threaded onto the output shaft 242 of the motor 243 so that as the motor turns, the spring plunger 213 is driven along the spring guide tube 152.

The complete assembly, comprising the end plug 239, the spring guide tube 152 and the spring plunger 213, is held together with rods (not shown).

The operation of the weight compensation device shown in Figure 4 will now be described. The fourth embodiment operates in a very similar way to the second and third embodiments described above. However, in the fourth embodiment the pre-tension of the spring 132 is varied by the motor 243. Operation of the motor 243 rotates the output shaft 242 and hence the spring plunger 213 is displaced along the spring guide tube. As the spring 132 abuts the spring plunger 213, the initial length and hence pre-tension in the spring 132 is varied by the displacement of the spring plunger 213. This is desirable when adjusting the weight compensation device for different weights to be compensated.

In an alternative embodiment (not illustrated) the motor 243 could be replaced by a linear actuator, having a linearly displaceable drive shaft. The drive shaft could be attached to the spring plunger 213, as in the previous embodiment.

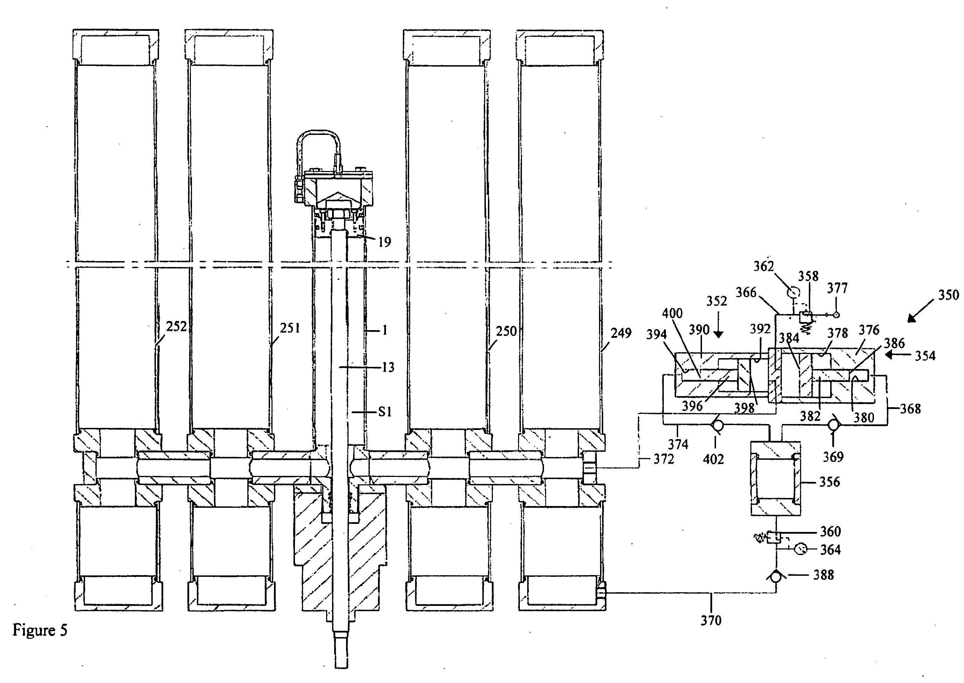

With reference to Figure 5, a weight compensation device according to a fifth embodiment of the present invention, includes a pressure stabiliser 350 comprising a pressure amplifier 352, a pressure adjuster 354 and a pressure reservoir 356.

The pressure adjuster 354 comprises a stepped cylinder 376 having a large diameter portion 378 and a small diameter portion 380. A stepped piston 382 is slidably received within the stepped cylinder 376 and has a first face 384 of large cross-sectional area and a second face 386 of smaller cross-sectional area. The large diameter portion 378 of the stepped cylinder 376 is in fluid communication with a pump 377 through a pipe 366, which is controlled by a valve 358 in response to the pressure in the pipe 366, measured by a manometer 362. The small diameter portion 380 of the stepped cylinder 376 is in fluid communication with the pressure reservoir 356 through a pipe 368. Backflow in the pipe 368 is prevented by a non-return valve 369.

The pressure reservoir 356 is in fluid communication with the pressure vessel 249 and hence the first pressure space S1 in the first cylinder 1 through a pipe 370. Flow along the pipe 370 is controlled by a valve 360 in response to the pressure in the pipe 370, measured by a manometer 364. Backflow in the pipe 370 is prevented by means of a non-return valve 388.

The pressure amplifier 352 comprises a stepped amplifier cylinder 390 having a large diameter portion 392 and a smaller diameter portion 394. A stepped amplifier piston 396 is slidably received in the amplifier cylinder 390. The amplifier piston 396 has a first face 398 with a large cross-sectional area and a second face 400 with a smaller cross-sectional area.

The large diameter portion 392 of the amplifier cylinder 390 is in fluid communication with the interior of the pressure vessel 249, and hence with the first pressure space S1, through a pipe 372. The small diameter portion 394 of the amplifier cylinder 390 is in fluid communication with the pressure reservoir 356 through a pipe 374. Backflow in the pipe 374 is prevented by a non-return valve 402.

To set up the system, a weight to be compensated, such as a machine tool or robot arm, is attached to the piston rod 13 of the first piston 19, and the pressure vessels 249, 250, 251, 252 and first pressure space S1 are pressurised by introducing compressed air into them until the weight to be compensated is just supported. The pump 377 is then operated so that compressed air is forced into the large diameter portion 378 of the stepped cylinder 376. As the first face 384 of the stepped piston 382 is larger than the second face 386, a pressure differential exists across the stepped piston 382, so that the pressure in the smaller diameter portion 380 of the stepped cylinder 376 is amplified. This results in a higher pressure in the smaller diameter portion 380 of the stepped cylinder 376, and hence in the pressure reservoir 356. When the desired pressure in the pressure reservoir 356 is indicated on the manometer 362, the valve 358 is closed. The initial pressure in the reservoir 356 is adjusted until the force on the second face 400 of the amplifier piston 396 exactly balances the force on the first face 398, when the amplifier piston 396 is substantially in a central position in the amplifier cylinder 390 and the first piston 19 is approximately halfway between its limits of movement in the first cylinder 1.

In operation of the system, as the first piston 19 moves up and down in response to movement of the weight to be compensated, the volume of the first pressure space S1 varies and hence the pressure in the pressure vessel 249 varies. This pressure is transmitted via the pipe 372 to the large diameter portion 392 of the amplifier cylinder 390 causing the amplifier piston 396 to be displaced.

When displacement of the first piston 19 causes the pressure in the first pressure space S1, and hence the pressure vessel 249 to increase, the amplifier piston 396 will be displaced towards the smaller diameter portion 394 of the amplifier cylinder 390. This has the effect of relieving the pressure in the pressure vessel 249 and hence in the first pressure space S1. Also, this displacement of the amplifier piston 396 has the effect of pressurising the pressure reservoir 356. As the cross-sectional area of a first face 398 of the amplifier piston 396 is larger than the cross-sectional area of the second face 400, the pressure in the pressure reservoir 356 is increased considerably compared to the pressure in the first pressure space S1 and the pressure vessel 249, and provides a stored volume of high pressure fluid.

If the first piston 19 then moves in the opposite direction, so that the pressure in the first pressure space S1 and hence in the pressure reservoir 249 reduces to a pressure level preset on the manometer 364, the valve 360 is opened, so that high pressure air from the pressure reservoir 356 is transmitted into the pressure vessel 249 and the first pressure space S1. When the pressure increases to a preset level, the valve 360 closes again. In this way, by operation of the pressure amplifier 352, the pressure in the first pressure space S1 is kept substantially constant throughout the range of movement of the piston rod. Consequently, the compensation force which compensates for the weight attached to the piston rod 13 is kept substantially constant, so that the pressure compensation is better than in prior art arrangements throughout the range of movement of the piston rod.

It will be appreciated that in the fifth embodiment, the change in volume generated by the displacement of the first piston 19, and the resulting change in pressure, are not compensated for by means of spring loaded accumulators, as in the previous embodiment, but instead by the combination of the pressure amplifier 352 and the high pressure reservoir 356. The pressure amplifier 352 relieves the excess pressure generated in the pressure vessel 249 and first pressure space S1 by movement of the first piston 19 towards the cylinder head 5. Similarly, a transfer of fluid from the pressure reservoir 356 to the pressure vessel 249 and first pressure space S1 alleviates the pressure reduction as the first piston 19 moves away from the cylinder head 5. A higher pressure must exist in the pressure reservoir 356 to enable fluid to flow into the pressure vessel 249 and first pressure space, and the pressure amplifier 352 provides this high pressure by means of the difference in cross-sectional area of the first face 398 and second face 400 of the amplifier piston 396. This difference in cross-sectional area causes a pressure differential across the amplifier piston 396, when it is in equilibrium.

In an alternative embodiment, not illustrated, the pressure vessels 249, 250, 251 and 252 are omitted and the volume of the pressure amplifier is increased, so that variations in pressure in the first pressure space S1 are minimised by operation of the pressure amplifier 352 alone.

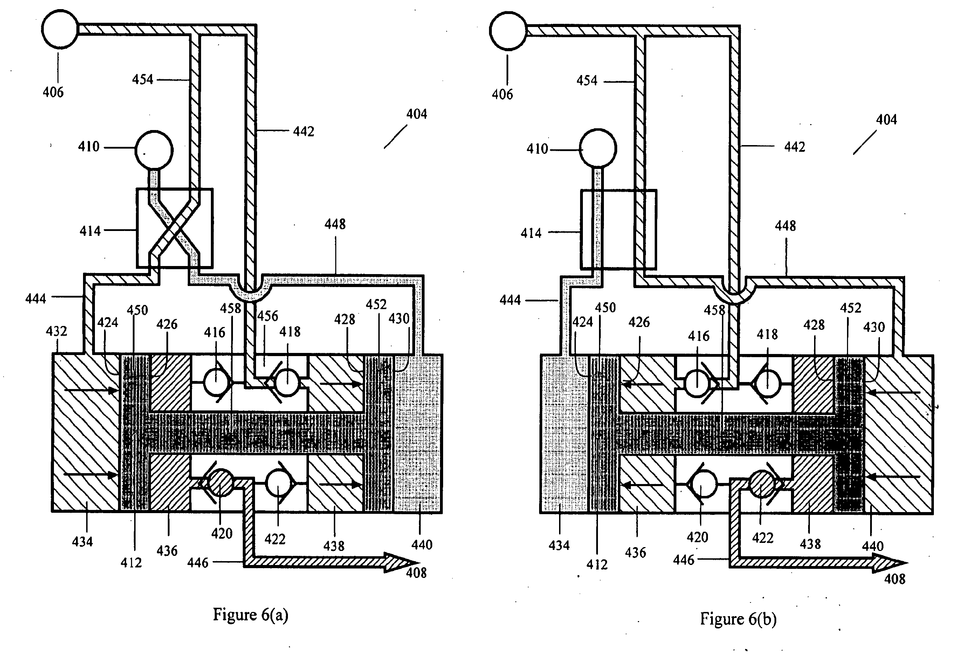

With reference to Figure 6, a weight compensation device, according to the fifth embodiment of the present invention may include a pressure multiplier 404. The pressure multiplier 404 comprises an inlet 406, an outlet 408 and a multiplier piston 412 disposed with a cylinder 432. The multiplier piston 412 consists of a first piston head 450 and a second piston head 452, which are connected together by a piston shaft 458. The first and second piston heads 450, 452 are slidably engaged within the cylinder 432 and the piston shaft 454 is slidably engaged within a sleeve 456, the sleeve being fixed centrally within the cylinder 432.

The cylinder 432, sleeve 456 and multiplier piston 412 together define first, second, third and fourth chambers 434, 436, 438, 440. The first chamber 434 is situated between a first end of the cylinder 432 and the first piston head 450 and the second chamber 436 is situated between the first piston head 450 and the sleeve 456. The third chamber 438 is situated between the sleeve 456 and the second piston head 452 and the fourth chamber 440 is situated between the second piston head 452 and a second end of the cylinder 432. Fluid within the first and second chambers 434, 436 acts on an outer face 424 and an inner face 426 of the first piston head 450 respectively. Similarly, fluid within the third and fourth chambers 438, 440 acts on an inner face 428 and an outer face 430 of the second piston head 452 respectively.

Disposed within the sleeve 456 are first, second, third and fourth non-return valves 416, 418, 420, 422. The first and third non-return valves 416, 420 are in flow communication with the second chamber 436, and the second and fourth non-return valves 418, 422 are in flow communication with the third chamber 438. Furthermore, the first and second non-return valves 416, 418 are in flow communication with the inlet 406 via a pipe 442 and the third and fourth non-return valves 418, 422 are in flow communication with the outlet 408 via a pipe 446.

The first and fourth non-return valves 416, 422 are orientated so that a fluid cannot flow from the second chamber 436 to the third chamber 438. Similarly, the second and third non-return valves 418, 420 are orientated so that a fluid cannot flow from the third chamber 438 to the second chamber 436.

The first and fourth chambers 434, 440 are in flow communication with a control valve unit 414 via a pipe 444 and a pipe 448, respectively. The control valve unit 414 is also in flow communication with an atmospheric vent 410 and the inlet 406 via a pipe 454. The control valve unit 414 is a 4-way directional valve with two positions. The first position shown in Figure 6(a) allows the atmospheric vent 410 to be in flow communication with the pipe 448 and the pipe 454 to be in flow communication with the pipe 444. The second position shown in Figure 6(b) allows the atmospheric vent 410 to be in flow communication with the pipe 444 and the pipe 454 to be in flow communication with the pipe 448.

The operation of the pressure multiplier 404 will now be described. When the control valve unit 414 is in its first position (figure 6(a)) fluid at the inlet 406 is able to flow through pipe 454, the control valve unit 414, pipe 444 and then into the first chamber 434. The inlet pressure therefore acts on the outer face 424 of the first piston head 450. In addition, fluid from the inlet 406 is initially able to flow through pipe 442, the first and second non-return valves 416, 418 and into the second and third chambers 436, 438. The first position of the valve control unit 414 also connects the atmospheric vent 410 to the fourth chamber 440 via pipe 448, such that the pressure acting on the outer face 430 of the second piston head 452 is substantially atmospheric. Therefore, with the inlet pressure, which is greater than atmospheric pressure, acting on the outer face 424 of the first piston head 450 and the outer face 428 of the second piston head 452, and with atmospheric pressure acting on the outer face 430 of the second piston head 452, the multiplier piston 412 is initially forced to move such that the first piston head 450 moves towards the sleeve 456 (as indicated by the arrows in Figure 6(a)). This motion causes fluid in the second chamber 436 to flow through the third non-return valve 420 and out to the outlet 408 via pipe 446.

The pressure in the first and third chambers 434, 438 acts on both the outer face 424 of the first piston head 450 and the inner face 428 of the second piston head 452 whereas the pressure in the second chamber only acts on the inner face 426 of the first piston head 450. Therefore once an equilibrium is reached, the pressure of the fluid in the second chamber 436 (and hence at the outlet 408) is greater than the pressure of the fluid in the first and third chambers 434, 438 (and hence at the inlet 406).

If the first piston head 450 reaches the sleeve 456, the control valve unit 414 is switched into its second position by an automatic control means (not shown). In this position, as shown in Figure 6(b), the atmospheric vent is in flow communication with the first chamber 434 and the inlet 406 is in flow communication with the second chamber 436 and the fourth chamber 440. The inlet pressure acting on the outer face 430 of the second piston head 452 and the inner face 426 of the first piston head 450 causes the second piston head 452 to move towards the sleeve 456 (as indicated by the arrows in Figure 6 (b)). The subsequent pressurisation of the fluid in the third chamber 438 causes the fourth non-return valve 422 to open. As described previously, the pressure at the outlet 408 is greater than the pressure at the inlet 406 because the inlet pressure acts on two faces of the multiplier piston 412 whereas the outlet pressure only resists one face.

If the second piston head 452 reaches the sleeve 456, the control valve unit 414 is returned to its first position by the automatic control means (not shown) and the above process is repeated.

The pressure multiplier 412 described above can replace the pressure amplifier 352 of the fifth embodiment. In this case the inlet 406 and outlet 408 would connect to pipe 372 and pipe 374 respectively. Similarly the pressure multiplier 412 could also replace the pressure adjustor 354 of the fifth embodiment and in this case the inlet 406 and outlet 408 would connect to pipe 366 and pipe 368 respectively.

It is understood that variations may be made in the foregoing without departing from the scope of the invention as defined by the appended claims.

**Claims**

1. A weight compensation device for compensating for the weight of a movable member, the device comprising;

    a first piston (19) connected to the moveable member and slidably received in a first cylinder (1), a first pressure space (S1) being defined between the first piston and a cylinder head of the first cylinder;
    a second piston (82) slidably received in a second cylinder (76), a second pressure space (S2b) being defined between the second piston and a cylinder head of the second cylinder, the first and second pressure spaces being in fluid communication;
    the second piston being displaceable in response to displacement of the first piston by the moveable member, displacement of the second piston (82) being resisted by a force applied to the second piston by a resilient element, **characterised by** a fixed volume chamber (66) in flow communication with the first and second pressure spaces; and in that the fluid is gas.

2. A device as claimed in claim 1, wherein the resilient element is a spring (132).

3. A device as claimed in claim 2, further comprising a spring force adjuster (T1, T2, T3) for adjusting the force applied to the second piston by the spring.

4. A device as claimed in claim 3, wherein the spring force adjuster spaces an end of the spring from an end plug (173, 195, 239) of the second cylinder.

5. A device as claimed in claim 4, wherein the spring force adjuster comprises a threaded rod (167) which engages a threaded bore formed in the plug.

6. A device as claimed in claim 4 or 5, wherein the spring force adjuster extends through the end plug and is provided with a tool receiving portion (166) externally of the second cylinder.

7. A device as claimed in claim 6, wherein the tool receiving portion comprises a hexagonal head, adapted to be rotated by a spanner.

8. A device as claimed in any one of claims 5 to 7, wherein the spring force adjuster is provided with a locking element (181), which locks the adjustment member in position, after adjustment.

9. A device as claimed in any one of claims 2 to 8, wherein the spring is located between the second piston and a spring plunger (161, 183, 213), the spring force adjuster acting on the spring plunger.

10. A device as claimed in claim 3 or 4, wherein the spring force adjuster is adjusted hydraulically.

11. A device as claimed in claim 10, wherein the spring force adjuster comprises a third piston (183) which abuts or otherwise engages the spring and is slideably received in the second cylinder, the force on the third piston being adjusted by altering the volume of a fluid introduced into a third pressure space between the third piston and an end plug of the second cylinder.

**12.** A device as claimed in claim 3 or 4, wherein the spring force adjuster comprises an electromotive device (247).

**13.** A device as claimed in claim 12, wherein the electromotive device comprises a motor (243).

**14.** A device as claimed in claim 13, wherein a drive shaft (242) of the motor is threaded and engages in the thread of a nut (219) attached to or otherwise engaging the spring.

**15.** A device as claimed in any one of the preceding claims, wherein a lubricant supply device is provided for lubricating at least one of the first and second pistons.

**16.** A device as claimed in claim 15, wherein lubricant is delivered to at least one of the first and/or second pistons through one or more nozzles located in a cylinder head of at least one of the first and second cylinders.

**17.** A device as claimed in any one of the preceding claims, wherein a face of at least one of the first and second pistons is substantially conical.

**18.** A device as claimed in any one of the preceding claims, wherein the second pressure space comprises a plurality of interconnected pressure spaces.

**19.** A device as claimed in any one of the preceding claims, wherein there are a plurality of second cylinders with respective second pistons slideably received therein, each second cylinder and second piston defining a respective second pressure space, the second pressure spaces being in fluid communication.

**20.** A device as claimed in claim 1, wherein the resilient element comprises a fluid.

**21.** A device as claimed in any one of the preceding claims, further comprising a pressure adjustor (350) for minimising variation in the pressure of fluid in the first and second pressure spaces caused by displacement of the first piston.

**22.** A device as claimed in claim 21, wherein the pressure adjustor comprises a pressure amplifier (352) and a high pressure reservoir (356).

**23.** A device as claimed in claim 22, wherein the pressure amplifier comprises an amplifier piston (382) having a first end (384) of a first diameter which is slideably received in a first portion (378) of an amplifier cylinder (376), the first portion of the amplifier cylinder being in flow communication with the first pressure space, and a second end (386) of a smaller diameter than the first end, the second end being slideably received in a second portion (380) of the amplifier cylinder which is in fluid communication with the pressure reservoir.

**24.** A device as claimed in claim 23, wherein the pressure reservoir is held in fluid communication with the first pressure space by means of a valve (388), the valve being opened in response to a drop in pressure in the first pressure space.

**25.** A device as claimed in claims 1 to 24, wherein the gas is compressed air.

**26.** A device as claimed in any one of claims 20 to 25, further comprising one or more additional pressure chambers which are in fluid communication with the first pressure space.

**27.** A device as claimed in any preceding claim, wherein the device further comprises:

a plurality of pressure chambers which are in fluid communication with the first pressure space.

**28.** A device as claimed in claim 27, wherein each pressure chamber is defined by a separate pressure vessel.

**29.** A device as claimed in claim 27 or 28, wherein each pressure chamber is adjacent the first cylinder.

**Patentansprüche**

**1.** Gewichtsausgleichsvorrichtung zum Kompensieren des Gewichts eines beweglichen Teils, umfassend:

einen ersten Kolben (19), der mit dem beweglichen Teil verbunden und gleitfähig in einem ersten Zylinder (1) aufgenommen ist, wobei ein erster Druckraum (S1) zwischen dem ersten Kolben und einem Zylinderkopf des ersten Zylinders bestimmt ist;
einen zweiten Kolben (82), der gleitfähig in einem zweiten Zylinder (76) aufgenommen ist, wobei ein zweiter Druckraum (S2b) zwischen dem zweiten Kolben und einem Zylinderkopf des zweiten Zylinders bestimmt ist, und der erste Druckraum und der zweite Druckraum eine Verbindung für Fluid aufweisen;
dass der zweite Kolben als Reaktion auf die Verschiebung des ersten Kolbens durch das bewegliche Teil verschoben werden kann, wobei der Verschiebung des zweiten Kolbens (82) eine Kraft entgegenwirkt, die ein elastisches Element auf den zweiten Kolben ausübt, **gekennzeichnet durch** eine Kammer (66) mit festem Volumen, die in Strömungsverbindung mit dem ersten und dem zweiten Druckraum steht, und **dadurch**, dass das Fluid ein Gas ist.

2. Vorrichtung nach Anspruch 1, worin das elastische Element eine Feder (132) ist.

3. Vorrichtung nach Anspruch 2, zudem umfassend einen Federkrafteinsteller (T1, T2, T3) zum Einstellen der Kraft, die die Feder auf den zweiten Kolben ausübt.

4. Vorrichtung nach Anspruch 3, worin der Federkrafteinsteller einen Abstand zwischen einem Ende der Feder und einem Verschlussstück (173, 195, 239) des zweiten Zylinders herstellt.

5. Vorrichtung nach Anspruch 4, worin der Federkrafteinsteller eine Gewindestange (167) umfasst, die in einer Gewindebohrung läuft, die in dem Verschlussstück ausgebildet ist.

6. Vorrichtung nach Anspruch 4 oder 5, worin sich der Federkrafteinsteller durch das Verschlussstück erstreckt und außerhalb des zweiten Zylinders mit einem Werkzeugaufnahmeabschnitt (166) versehen ist.

7. Vorrichtung nach Anspruch 6, worin der Werkzeugaufnahmeabschnitt einen sechseckigen Kopf aufweist, der für das Drehen mit einem Schraubenschlüssel ausgelegt ist.

8. Vorrichtung nach irgendeinem der Ansprüche 5 bis 7, worin der Federkrafteinsteller mit einem Feststellelement (181) versehen ist, das das Einstellteil nach dem Einstellen in seiner Lage festhält.

9. Vorrichtung nach irgendeinem der Ansprüche 2 bis 8, worin die Feder zwischen dem zweiten Kolben und einem Federdruckkolben (161, 183, 213) angeordnet ist, und der Federkrafteinsteller auf den Federdruckkolben wirkt.

10. Vorrichtung nach Anspruch 3 oder 4, worin der Federkrafteinsteller hydraulisch eingestellt wird.

11. Vorrichtung nach Anspruch 10, worin der Federkrafteinsteller einen dritten Kolben (183) enthält, der an der Feder anliegt oder anderweitig in sie eingreift und gleitfähig im zweiten Zylinder aufgenommen ist, wobei die Kraft auf den dritten Kolben dadurch eingestellt wird, dass man das Volumen eines Fluids verändert, das in einen dritten Druckraum zwischen dem dritten Kolben und einem Verschlussstück des zweiten Zylinders eingefüllt ist.

12. Vorrichtung nach Anspruch 3 oder 4, worin der Federkrafteinsteller eine elektromotorische Vorrichtung (247) umfasst.

13. Vorrichtung nach Anspruch 12, worin die elektromotorische Vorrichtung einen Motor (243) enthält.

14. Vorrichtung nach Anspruch 13, worin eine Antriebswelle (242) des Motors mit einem Gewinde versehen ist und in das Gewinde einer Mutter (219) eingreift, die an der Feder befestigt ist oder anderweitig mit ihr verbunden ist.

15. Vorrichtung nach irgendeinem der vorhergehenden Ansprüche, worin eine Schmiermittel-Zufuhrvorrichtung für die Schmierung entweder des ersten Kolbens oder des zweiten Kolbens oder beider Kolben bereitgestellt ist.

16. Vorrichtung nach Anspruch 15, worin entweder der erste Kolben oder der zweite Kolben oder beide Kolben über eine oder mehrere Düsen mit Schmiermittel versorgt werden, die sich in einem Zylinderkopf des ersten oder des zweiten Zylinders oder beider Zylinder befinden.

17. Vorrichtung nach irgendeinem der vorhergehenden Ansprüche, worin eine Fläche des ersten oder des zweiten Kolbens oder beider Kolben im Wesentlichen konisch ist.

18. Vorrichtung nach irgendeinem der vorhergehenden Ansprüche, worin der zweite Druckraum eine Anzahl miteinander verbundener Druckräume umfasst.

19. Vorrichtung nach irgendeinem der vorhergehenden Ansprüche, in der mehrere zweite Zylinder vorhanden sind, in denen jeweils zweite Kolben gleitfähig aufgenommen sind, wobei jeder zweite Zylinder und zweite Kolben einen entsprechenden zweiten Druckraum bestimmt, und die zweiten Druckräume eine Verbindung für Fluid aufweisen.

20. Vorrichtung nach Anspruch 1, worin das elastische Element ein Fluid enthält.

21. Vorrichtung nach irgendeinem der vorhergehenden Ansprüche, zudem umfassend einen Druckeinsteller (350), der die Druckabweichung im Fluid in den ersten und zweiten Druckräumen, die durch eine Verschiebung des ersten Kolbens verursacht wird, so klein wie möglich macht.

22. Vorrichtung nach Anspruch 21, worin der Druckeinsteller einen Druckverstärker (352) und einen Hochdruck-Vorratsbehälter (356) umfasst.

23. Vorrichtung nach Anspruch 22, worin der Druckverstärker einen Verstärkerkolben (382) enthält, der ein erstes Ende (384) mit einem ersten Durchmesser aufweist, das gleitfähig in einem ersten Abschnitt (378) eines Verstärkerzylinders (376) aufgenommen ist, wobei der erste Abschnitt des Verstärkerzylinders in Strömungsverbindung mit dem ersten Druckraum steht, und ein zweites Ende (386) mit einem geringeren Durchmesser als das erste Ende, wobei das zweite Ende gleitfähig in einem zweiten Abschnitt (380) des Verstärkerzylinders aufgenommen ist, der in Strömungsverbindung mit dem Druck-Vorratsbehälter steht.

24. Vorrichtung nach Anspruch 23, worin der Druck-Vorratsbehälter über ein Ventil (388) mit dem ersten Druckraum in Fluidverbindung steht, und das Ventil als Reaktion auf einen Druckabfall im ersten Druckraum geöffnet wird.

25. Vorrichtung nach Anspruch 1 bis 24, worin das Gas komprimierte Luft ist.

26. Vorrichtung nach irgendeinem der Ansprüche 20 bis 25, zudem umfassend eine oder mehrere zusätzliche Druckkammern, die für Fluid mit dem ersten Druckraum verbunden sind.

27. Vorrichtung nach irgendeinem vorhergehenden Anspruch, wobei die Vorrichtung weiterhin umfasst:

    eine Anzahl Druckkammern, die für Fluid mit dem ersten Druckraum verbunden sind.

28. Vorrichtung nach Anspruch 27, worin jede Druckkammer durch einen eigenen Druckbehälter bestimmt ist.

29. Vorrichtung nach Anspruch 27 oder 28, worin jede Druckkammer dem ersten Zylinder benachbart ist.

**Revendications**

1. Dispositif de compensation de poids pour compenser le poids d'un organe mobile, le dispositif comprenant :

    un premier piston (19) connecté à l'organe mobile et reçu de façon glissante dans un premier cylindre (1), un premier espace de pression (S1) étant défini entre le premier piston et une culasse du premier cylindre ;
    un deuxième piston (82) reçu de façon glissante dans un deuxième cylindre (76), un deuxième espace de pression (S2b) étant défini entre le deuxième piston et une culasse du deuxième cylindre, les premier et deuxième espaces de pression étant en communication de fluide ;
le deuxième piston étant déplaçable en réponse au déplacement du premier piston par l'organe mobile, le déplacement du deuxième piston (82) subissant une résistance provenant d'une force appliquée au deuxième piston par un élément résilient, **caractérisé par** une chambre à volume fixe (66) en communication d'écoulement avec les premier et deuxième espaces de pression, et en ce que le fluide est un gaz.

2. Dispositif selon la revendication 1, dans lequel l'élément résilient est un ressort (132).

3. Dispositif selon la revendication 2, comprenant en outre un dispositif de réglage de force de ressort (T1, T2, T3) pour régler la force appliquée au deuxième piston par le ressort.

4. Dispositif selon la revendication 3, dans lequel le dispositif de réglage de force de ressort maintient une extrémité du ressort à distance d'un bouchon d'extrémité (173, 195, 239) du deuxième cylindre.

5. Dispositif selon la revendication 4, dans lequel le dispositif de réglage de force de ressort comprend une tige filetée (167) qui se visse dans un trou fileté prévu dans le bouchon.

6. Dispositif selon la revendication 4 ou 5, dans lequel le dispositif de réglage de force de ressort s'étend à travers le bouchon d'extrémité et est pourvu d'une partie de réception d'outil (166) à l'extérieur du deuxième cylindre.

7. Dispositif selon la revendication 6, dans lequel la partie de réception d'outil comprend une tête hexagonale, adaptée pour être mise en rotation par une clé.

8. Dispositif selon l'une quelconque des revendications 5 à 7, dans lequel le dispositif de réglage de force de ressort est pourvu d'un élément de blocage (181) qui bloque l'organe de réglage en position après réglage.

9. Dispositif selon l'une quelconque des revendications 2 à 8, dans lequel le ressort est situé entre le deuxième piston et un poussoir à ressort (161, 183, 213), le dispositif de réglage de force de ressort agissant sur le poussoir à ressort.

10. Dispositif selon la revendication 3 ou 4, dans lequel le dispositif de réglage de force de ressort est réglé de façon hydraulique.

11. Dispositif selon la revendication 10, dans lequel le dispositif de réglage de force de ressort comprend un troisième piston (183) qui bute sur ou se met autrement en contact avec le ressort et est reçu de façon glissante dans le deuxième cylindre, la force exercée sur le troisième piston étant réglée en modifiant le volume d'un fluide introduit dans un troisième espace de pression situé entre le troisième piston et un bouchon d'extrémité du deuxième cylindre.

12. Dispositif selon la revendication 3 ou 4, dans lequel le dispositif de réglage de force de ressort comprend un dispositif électromoteur (247).

13. Dispositif selon la revendication 12, dans lequel le dispositif électromoteur comprend un moteur (243).

14. Dispositif selon la revendication 13, dans lequel un arbre d'entraînement (242) du moteur est fileté et se visse dans le filetage d'un écrou (219) fixé ou autrement accroché au ressort.

15. Dispositif selon l'une quelconque des revendications précédentes, dans lequel un dispositif d'alimentation en lubrifiant est prévu pour lubrifier au moins l'un des premier et deuxième pistons.

16. Dispositif selon la revendication 15, dans lequel du lubrifiant est envoyé à au moins l'un des premier et/ou deuxième pistons par une ou plusieurs buses situées dans une culasse d'au moins l'un des premier et deuxième cylindres.

17. Dispositif selon l'une quelconque des revendications précédentes, dans lequel une face d'au moins l'un des premier et deuxième pistons est sensiblement conique.

18. Dispositif selon l'une quelconque des revendications précédentes, dans lequel le deuxième espace de pression comprend une pluralité d'espaces de pression interconnectés.

19. Dispositif selon l'une quelconque des revendications précédentes, comprenant une pluralité de deuxièmes cylindres avec des deuxièmes pistons respectifs reçus de façon glissante à l'intérieur, chaque deuxième cylindre et deuxième piston définissant une deuxième espace de pression respectif, les deuxièmes espaces de pression étant en communication de fluide.

20. Dispositif selon la revendication 1, dans lequel l'élément résilient comprend un fluide.

21. Dispositif selon l'une quelconque des revendications précédentes, comprenant en outre un dispositif de réglage de pression (350) pour minimiser la variation de pression du fluide dans les premier et deuxième espaces de pression due au déplacement du premier piston.

22. Dispositif selon la revendication 21, dans lequel le dispositif de réglage de pression comprend un amplificateur de pression (352) et un réservoir à haute pression (356).

23. Dispositif selon la revendication 22, dans lequel l'amplificateur de pression comprend un piston d'amplificateur (382) ayant une première extrémité (384) d'un premier diamètre qui est reçue de façon glissante dans une première partie (378) d'un cylindre d'amplificateur (376), la première partie du cylindre d'amplificateur étant en communication de fluide avec le premier espace de pression, et une deuxième extrémité (386) ayant un plus petit diamètre que la première extrémité, la deuxième extrémité étant reçue de façon glissante dans une deuxième partie (380) du cylindre d'amplificateur qui est en communication de fluide avec le réservoir sous pression.

24. Dispositif selon la revendication 23, dans lequel le réservoir sous pression est maintenu en communication de fluide avec le premier espace de pression au moyen d'un clapet (388), le clapet étant ouvert en réponse à une chute de pression dans le premier espace de pression.

25. Dispositif selon les revendications 1 à 24, dans lequel le gaz est de l'air comprimé.

26. Dispositif selon l'une quelconque des revendications 20 à 25, comprenant en outre une ou plusieurs chambres de pression supplémentaires qui sont en communication de fluide avec le premier espace de pression.

27. Dispositif selon l'une quelconque des revendications précédentes, dans lequel le dispositif comprend en outre une pluralité de chambres de pression qui sont en communication de fluide avec le premier espace de pression.

28. Dispositif selon la revendication 27, dans lequel chaque chambre de pression est définie par une cuve de pression distincte.

29. Dispositif selon la revendication 27 ou 28, dans lequel chaque chambre de pression est adjacente au premier cylindre.

Figure 1

Figure 2

Figure 3

Figure 4

Figure 5

17

Figure 6(a)

Figure 6(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1152200 A
- GB 986879 A
- US 6540459 B